# EUROPEAN PATENT SPECIFICATION

(11) **EP 2 887 019 B1**
(45) Date of publication and mention of the grant of the patent: **09.03.2016**
(21) Application number: 13197738.1
(22) Date of filing: 17.12.2013
(51) Int. Cl.: G01C 21/34

(54) **Navigation apparatus and navigation system**
Navigationsvorrichtung und Navigationssystem
Appareil et système de navigation

(43) Date of publication of application: 24.06.2015
(73) Proprietor: Alpine Electronics, Inc., Tokyo (JP)
(72) Inventor: Munakata, Kenji, Iwaki, Fukushima 970-1192 (JP); Ohira, Masaaki, Iwaki, Fukushima 970-1192 (JP); Suzuki, Mitsuru, Iwaki, Fukushima 970-1192 (JP); Kohata, Kumiko, Iwaki, Fukushima 970-1192 (JP); Yamaguchi, Yoji, Iwaki, Fukushima 970-1192 (JP)
(74) Representative: Klunker . Schmitt-Nilson . Hirsch

(56) References cited:
- EP-A1- 1 103 787
- EP-A2- 1 256 785
- WO-A2-2009/077679

## Description

The present invention relates to a technique of a navigation apparatus adapted to provide route guidance using route information acquired from an external server.

In a navigation apparatus for providing route guidance using route information acquired from an external server, a technique is known to provide route guidance, as disclosed, for example, in JP 2011-75403 A, and Japanese Patent No. 4147712, such that the external server searches for an optimum route taking into account road traffic information such as congestion information, and the external server provides route information associated with the route selected via the search to the navigation apparatus that requested the route information via a mobile communication network. In a situation in which the navigation apparatus is allowed to access the external server, route information is acquired from the external server and route guidance is provided using the acquired route information. In a situation in which the navigation apparatus is not allowed to access the external server, a route to a destination is searched for based on map data stored in the navigation apparatus and route guidance is provided based on the route selected via the search process.

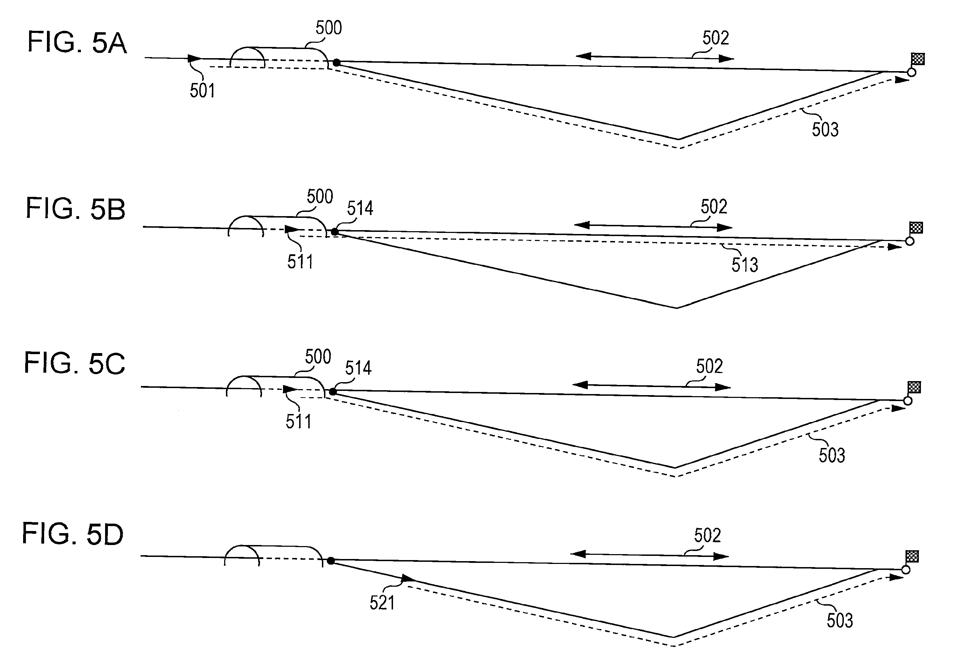

In the above-described navigation apparatus adapted to acquire route information from the external server and provide route guidance based on the acquired route information, a problem, as described below, may occur in the technique in which when it is not allowed to access the external server, a route to a destination is searched for based on the map data stored in the navigation apparatus and route guidance is provided using the route selected via the search. For example, let it be assumed that, as illustrated in Fig. 5A, the navigation apparatus is at the current point 501 and has acquired, from an external server, route information of a route 503 that allows it to avoid a congested section 502. Let it be further assumed that as illustrated in Fig. 5B, the navigation apparatus then goes into a tunnel 500, which makes it impossible for the navigation apparatus to, at the current point 511 in the tunnel 500, access the external server. In this case, at the current point 511 in the tunnel 500 at which the navigation apparatus is not capable of accessing the external server, the navigation apparatus searches for a route based on map data stored in the navigation apparatus. However, because the navigation apparatus is not capable of taking into account congestion in the searching for the route, a route 513 passing through the congested section 502 is selected as a result of the searching.

When the route 513 passing through the congested section 502 is selected as in this specific case, if it does not become again possible to access the external server to acquire new route information from the external server before reaching a branch point 514 at which a route 503 should be selected to avoid the congested section 502 instead of selecting the route 513 passing through the congested section 502, then the undesirable route 513 passing through the congested section 502 is selected via the search performed by the navigation apparatus, and route guidance is performed for the undesirable route 513.

WO 2009/077679 A2 relates to a navigation and location terminal that comprises a navigation and location data operating unit, a map storage unit, a radio or wire communication unit for connecting a navigation and location data operating server to the operating unit of the terminal, a switching unit for connecting the operating unit to the communication unit or to the map storage unit, wherein the terminal includes a means for automatically switching the map storage unit to the operating unit if the communication unit is inactive.

EP 1 103 787 A1 discloses a communication route guidance system in which data is transmitted and received between an information center and each of a plurality of mobile units mounted on moving bodies such as vehicles using communication. The information center has the latest road data. The information center prepares recommended route guidance data, in reference to said latest road data, for guiding the mobile unit from a current position to a destination in response to a request from the mobile unit. The mobile unit has a road data similar to the road data in the information center and means for detecting whether or not the mobile unit can communicate with the information center. In a case where the mobile unit cannot communicate with the information center, the mobile unit prepares a route guidance data in reference to the road data in the mobile unit. Even in a case where a communication link is disrupted during transmission of route guidance data to the mobile unit, the mobile unit can effectively prepare whole route guidance data in combination with already-received route guidance data and additionally prepared route guidance data in reference to the road data in the mobile unit.

EP 1 256 785 A2 discloses a navigation method and system whereby users of the systems are provided with backup driving instructions. A wireless communications system allows end users' computing devices to receive dynamic route guidance from a remotely located navigation services provider. In addition to the dynamic route guidance, the navigation service provider also provides the end users with backup driving instruction data which can be used in case wireless communication is interrupted.

In view of the above, in a navigation apparatus adapted to acquire route information from an external server and provide route guidance based on the acquired route information such that when it is impossible to access the external server, a route is searched for based on map data stored in the navigation apparatus and route guidance is provided based on a route selected via the searching, the present invention provides a technique to suppress a possibility that route guidance is provided for an undesirable route during a period in which it is impossible to access the external server.

The invention is related to a navigation apparatus according to claim 1 and a navigation system including such navigation apparatus according to claim 5.

According to an aspect, the present invention provides a navigation apparatus including a mobile communication apparatus for performing mobile communication, the navigation apparatus further including current point calculation means adapted to calculate the current point, navigation information acquisition means adapted to repeatedly and intermittently connect via the mobile communication to a navigation server adapted to provide navigation information including route data representing a route from the current point to a specified destination and also including one or more pieces of guidance data each representing a guidance content associated with a guidance point at a guidance provision point in a section on the route from the current point thereby acquiring the navigation information for the specified destination and the current point that is calculated by the current point calculation means each time a connection to the navigation server is made, a storage apparatus in which map data is stored, and guidance provision means. The guidance provision means is adapted to provide guidance such that in a period in which the navigation information acquisition means is capable of connecting to the navigation server, the route is presented based on the current point calculated by the current point calculation means and the last navigation information acquired by the navigation information acquisition means and guidance associated with a guidance point is provided when the current point calculated by the current point calculation means becomes close to the guidance point, while in a period in which the navigation information acquisition means is not capable of connecting to the navigation server, when the last navigation information acquired by the navigation information acquisition unit includes one or more pieces of not-yet-provided guidance data of guidance points, if a number of pieces of not-yet-provided guidance data is equal to or greater than a predetermined value, the route is presented based on the last navigation information acquired by the navigation information acquisition unit and guidance associated with a guidance point is provided when the current point calculated by the current point calculation means becomes close to the guidance point, but if the number of pieces of not-yet-provided guidance data is smaller than the predetermined value, a route to the specified destination from the current point calculated by the current point calculation means is selected by performing searching based on the map data stored in the storage apparatus, one or more guidance provision points are set on the selected route, the selected route is presented, and guidance associated with a guidance provision point is provided when the current point calculated by the current point calculation means becomes close to the guidance provision point.

In the navigation apparatus, the section may be a section from the specified current point to a point on the route located apart from the specified current point by a predetermined distance, or may be a section from the current point to a point on the route predicted to be reached by the navigation apparatus when a predetermined time elapses. In the navigation apparatus, when it becomes impossible to connect to the navigation server, the navigation information acquisition unit may monitor whether it again becomes possible to connect to the navigation server, and when it again becomes possible to connect to the navigation server, the navigation information acquisition unit may restart to intermittently acquire navigation information.

In the navigation apparatus, even in a state in which it is impossible to connect the navigation server adapted to provide navigation information including route data representing a route from the current point to a specified destination and also including one or more pieces of guidance data each representing a guidance content associated with a guidance point at a guidance provision point in a section on the route from the current point, when navigation information acquired last includes one or more pieces of not-yet-provided guidance data of guidance points, if a number of pieces of not-yet-provided guidance data is equal to or greater than a predetermined value, a route may be presented based on the last navigation information acquired by the navigation information acquisition unit and guidance associated with a guidance point may be provided when the current point calculated by the current point calculation means becomes close to the guidance point.

In general, the navigation server is capable of setting a route based on information on a greater number of items (for example, real-time road traffic information such as congestion information) than the navigation apparatus is capable. Therefore, the route selected by the navigation server is likely to be more suitable than the route selected via searching performed by the navigation apparatus.

In this regard, the navigation apparatus is adapted such that even in a situation in which it is impossible to access the navigation server, when navigation information acquired last includes one or more pieces of not-yet-provided guidance data of guidance points, if the number of pieces of not-yet-provided guidance data is equal to or greater than the predetermined value, it is allowed to perform route guidance for a suitable route based on navigation information acquired from the navigation server, which leads to a reduction of a possibility that route guidance is provided for an undesirable route in the situation in which it is impossible to access the navigation server.

As described above, the present invention provides an effect that in the navigation apparatus adapted to acquire route information from an external server and provide route guidance based on the acquired route information such that when it is impossible to access the external server, a route is searched for based on map data stored in the navigation apparatus and route guidance is provided based on a route found in the searching, it is allowed to reduce the possibility that route guidance is provided for an undesirable route in a situation in which it is impossible to access the external server.

According to an aspect, the present invention also provides a navigation system including a navigation apparatus according to the invention and a navigation server to which the navigation apparatus is capable of connecting via the mobile communication, the navigation server comprising navigation information provision means adapted to provide navigation information including route data and guidance data to the navigation apparatus, the route data representing a route from the current point to a destination both specified by the navigation apparatus connected to the navigation server via the mobile communication, the guidance data representing a guidance content associated with a guidance point at a guidance provision point in a section on the route from the current point.

### BRIEF DESCRIPTION OF THE DRAWINGS

Fig. 1 is a block diagram illustrating a configuration of a smartphone according to an embodiment of the present invention.
Fig. 2 is a diagram illustrating a relationship between a smartphone according to an embodiment of the present invention and external apparatuses and an environment.
Fig. 3 is a diagram illustrating navigation information according to an embodiment of the present invention.
Fig. 4 is a flow chart illustrating a navigation information updating process according to an embodiment of the present invention.
Figs. 5A to 5D are diagrams illustrating, in a comparative manner, an example of a navigation information updating process according to an embodiment of the invention and an example of a conventional navigation information updating process.

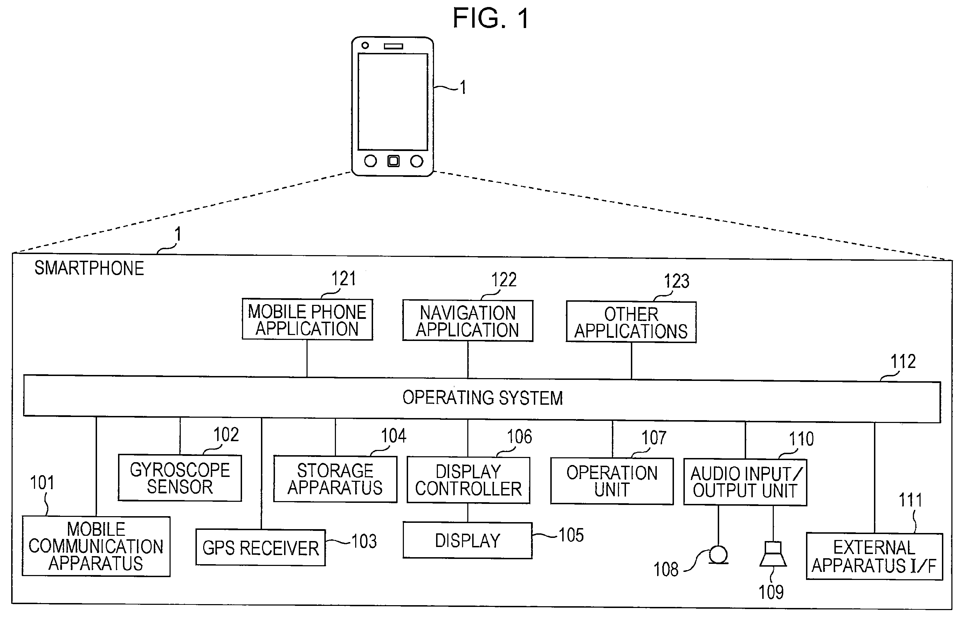

Embodiments of the present invention are described below for a case in which the invention is applied by way of example to a smartphone (multifunction portable telephone). Fig. 1 illustrates a configuration of a smartphone according to a first embodiment. The smartphone 1 is a mobile apparatus carried by a user, and includes, as illustrated in Fig. 1, a mobile communication apparatus 101 via which to access a mobile communication network, a gyroscope sensor 102, a GPS receiver 103, a storage apparatus 104, a display 105, a display controller 106 that controls the display 105 to display information, an operation unit 107 including an operation button and a touch panel laminated on the surface of the display 105, an audio input/output unit 110 that inputs and outputs a voice/sound using a microphone 108 and a speaker 109, an external apparatus interface 111 configured to mutually communicate with an external apparatus via a wire or near field communication, an operating system 112 of the smartphone 1, and a plurality of applications that are managed by the operating system 112 and that operate on the operating system 112.

The present smartphone includes, as applications operating on the operating system 112, a mobile phone application 121, a navigation application 122, and other applications 123. Note that from the point of view of hardware, the smartphone 1 is configured using a computer including a CPU, a memory, and so on, and the operating system 112 and the applications are realized by the computer by executing computer programs.

Each application is allowed to use, via the operating system 112, functions of the mobile communication apparatus 101, the gyroscope sensor 102, the GPS receiver 103, the storage apparatus 104, the display controller 106, the operation unit 107, the audio input/output unit 110, and the external apparatus interface 111.

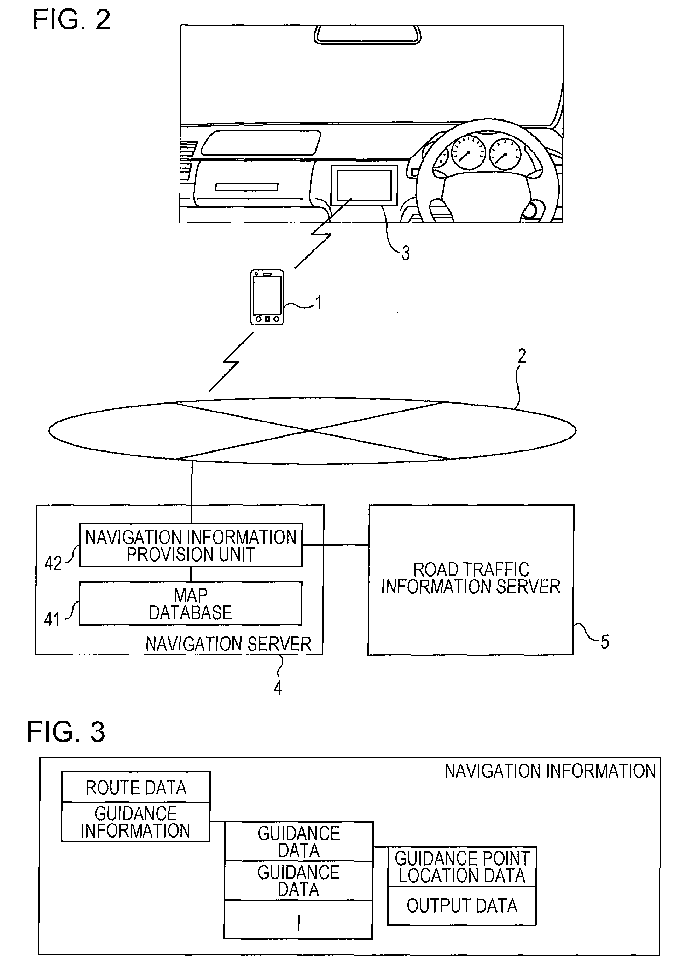

As illustrated in Fig. 2, the mobile communication apparatus 101 is capable of connecting to a mobile communication network 2 via wireless communication. The external apparatus interface 111 is capable of wirelessly connecting to an in-vehicle system 3 disposed in a vehicle. In a state in which the external apparatus interface 111 is connected with the in-vehicle system 3, the operating system 112 and the applications of the smartphone 1 are capable of displaying an image on the display 105 via the display controller 106 and via the external apparatus interface 111 or capable of displaying an image on a display apparatus included in the in-vehicle system 3. Furthermore, it is also allowed to output a voice/sound such that a voice/sound output from the speaker 109 via the audio input/output unit 110 is also output from an audio output apparatus provided in the in-vehicle system 3.

The mobile phone application 121 of the smartphone 1 is an application that allows the smartphone 1 to function as a mobile phone using the functions of the mobile communication apparatus 101, the audio input/output unit 110, the operation unit 107, and the display controller 106 and the like. The storage apparatus 104 has map data stored in advance therein. During a route guidance operation, one piece of navigation information is stored as current navigation information in the storage apparatus 104. Fig. 3 illustrates a data structure of navigation information. As illustrated in Fig. 3, the navigation information includes route data and guidance information. The route data is data representing a route to a destination. The guidance information includes guidance data provided for each guidance point on a route indicated by the route data. Guidance points are points at each of which information on the point is provided to a user. More specifically, for example, the user is notified that a guidance point is being approached, and is notified of a direction in which the point is to be passed though, a lane to be selected to approach the point, and so on. Guidance points are set, for example, at points at which a driving direction is to be changed to run along the route (for example, intersections at which turning to left or right is to be performed).

Each piece of guidance data includes guidance point location data indicating a location of the guidance point and output data representing a guidance content to be output as guidance. For example, in a case where output data is for a guidance point set at an intersection at which a driving direction is to be performed, the output data may include image data representing in detail the intersection and surrounds thereof including a representation of a passing direction to be followed along the route, audio data for providing voice guidance about the direction in which the intersection is to be passed through, image data representing a lane guidance diagram indicating a lane to be selected to approach the intersection, and the like.

Referring again to Fig. 1, the navigation application 122 calculates the current point and the current moving direction using the GPS receiver 103 or the gyroscope sensor 102. The navigation application 122 generates a navigation image in which a current point mark indicating the current point and the current moving direction is superimposed on a map represented by the map data stored in the storage apparatus 104, and a route represented by route data included in the current navigation information stored in the storage apparatus 104 is also superimposed on the map, and the navigation application 122 displays the generated navigation image on the display 105 via the display controller 106.

When the distance to a guidance point indicated by guidance point location data in one of pieces of guidance data in guidance information of the current navigation information stored in the storage apparatus 104 becomes equal to or smaller than a predetermined value, the navigation application 122 provides guidance about the guidance point being approached by outputting a voice/sound according to audio data included in output data of the guidance data and/or outputting image data included in the output data of the guidance data.

As illustrated in Fig. 2, the navigation application 122 is capable of accessing an external navigation server 4 via the mobile communication apparatus 101 and the mobile communication network 2. The navigation server 4 is capable of acquiring road traffic information about congestion or the like from an external road traffic information server 5.

As illustrated in Fig. 2, the navigation server 4 includes a map database 41 storing map data and a navigation information provision unit 42. When the navigation information provision unit 42 receives a navigation information request including information specifying a current point and a destination from the navigation application 122 of the smartphone 1, the navigation information provision unit 42 acquires road traffic information from the road traffic information server 5 and, based on the map data in the map database 41, searches for an optimum route from the current point to the destination specified by the navigation information request according to a predetermined criterion in terms of, for example, an estimated time necessary to reach the destination taking into account the acquired road traffic information. The navigation information provision unit 42 then sets guidance points on the route selected via the search and generates guidance data for each set guidance point. More specifically, the guidance points are set by way of example only in a section on the selected route with a predetermined length (for example, 1 km) from the current point or only in a section on the selected route from the current point to a point predicted to be reached in an elapse of a predetermined time (for example 1 hour) by the smartphone 1 that issued the navigation information request. Guidance points may be set one by one on the selected route sequentially in a direction from the current point to the destination until the number of set guidance points reaches a predetermined value (for example, 10), thereby limiting the maximum number of guidance points to the predetermined value.

The navigation information provision unit 42 then generates navigation information including route data of the route selected via the search and guidance information including guidance data of each set guidance point, and the navigation information provision unit 42 transmits the generated navigation information to the navigation application 122 of the smartphone 1 that issued the navigation information request. The section in which guidance points are set is limited to a particular section on the selected route with the predetermined distance from the current point or the maximum number of guidance points is limited to the particular value in the above-described manner, because it becomes possible to suppress the data size of the navigation information to be transmitted and/or suppress the time needed to transmit the guidance information by setting guidance points not at all points but only at points in a limited range close to the current point, otherwise the total data size of the navigation information to be transmitted would be too large.

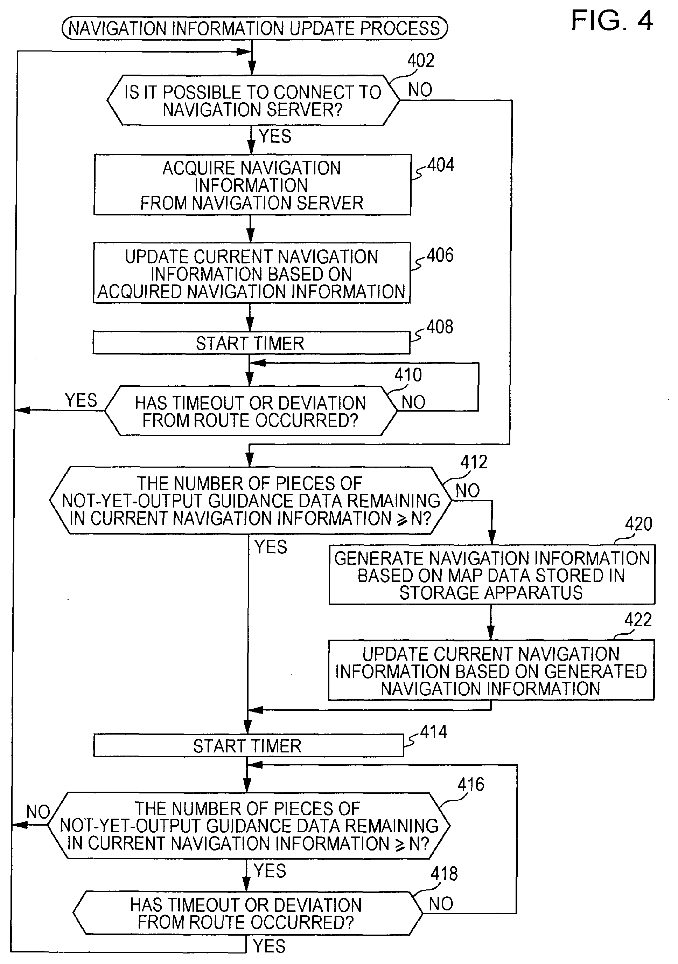

Next, a description is given below as to the navigation information updating process performed by the navigation application 122 to store the current navigation information in the storage apparatus 104 and update the current navigation information during a period in which the destination set is maintained. Fig. 4 illustrates a procedure of the navigation information updating process. In this process, first, as illustrated in Fig. 4, the mobile communication apparatus 101 is controlled to try to connect to the external navigation server 4 via the mobile communication network 2 thereby determining whether it is possible to connect to the navigation server 4 (step 402). In a case where it is possible to connect to the navigation server 4, a navigation information request including information specifying a current point and a destination is transmitted to the navigation server 4 thereby acquiring navigation information from the navigation information provision unit 42 of the navigation server 4 (step 404), and the current navigation information is updated by replacing the current guidance information stored in the storage apparatus 104 with the acquired navigation information (step 406).

Thereafter, a timer having a particular timeout value (for example, 5 minutes) is started (step 408). If the timeout value of the timer is reached or the current point deviates from the route represented by the route data of the current navigation information (step 410), then the processing flow returns to step 402.

On the other hand, in a case where it is determined in step 402 that it is not possible to connect to the navigation server 4, then it is further determined whether the guidance information of the current navigation information stored in the storage apparatus 104 includes N or more pieces of not-yet-provided guidance data of guidance points, that is, whether there are N or more pieces of guidance data that have not yet output because the guidance points thereof have not yet been reached, where N is a predetermined number (for example, five) (step 412).

In a case where the guidance information of the current navigation information includes N or more pieces of not-yet-provided guidance data of guidance points where N is the predetermined number, a timer having a particular timeout value (for example, 5 minutes) is started (step 414). Thereafter it is started to monitor an occurrence of a change in the number of pieces of not-yet-provided guidance data of guidance points included in the guidance information of the current navigation information to a value smaller than the predetermined value N (step 416) and an occurrence of timeout of the timer or a deviation of the current point from a route indicated by the route data of the current navigation information (step 418). If the monitoring detects any one of occurrences: (1) a change in the number of pieces of not-yet-provided guidance data of guidance points to a value smaller than the predetermined value N (step 416); (2) timeout of the timer; and (3) a deviation of the current point from the route indicated by the route data of the current navigation information (step 418), then the processing flow returns to step 402.

On the other hand, in a case where the determination in step 412 is negative as to whether the guidance information of the current navigation information includes N or more pieces of not-yet-provided guidance data of guidance points where N is the predetermined number (for example, 5), a route that is optimum in terms of a particular evaluation criterion, such as a route that needs the shortest time to reach the destination from the current point, is searched for based on the map data stored in the storage apparatus 104. Furthermore, in this case, guidance points are set on the route selected via the search, and guidance data for each set guidance point is generated. Navigation information is then generated which includes route data of the route selected via the search and guidance information including the generated guidance data (step 420). Furthermore, the current navigation information is updated by replacing the current guidance information stored in the storage apparatus 104 with the generated navigation information (step 422).

Thereafter, a timer having a particular timeout value (for example, 5 minutes) is started (step 414). Thereafter it is started to monitor an occurrence of a change in the number of pieces of not-yet-provided guidance data of guidance points included in the guidance information of the current navigation information to a value smaller than the predetermined value N (step 416), and an occurrence of timeout in the timer or a deviation of the current point from a route indicated by the route data of the current navigation information (step 418). If the monitoring detects any one of occurrences: (1) a change in the number of pieces of not-yet-provided guidance data of guidance points to a value smaller than the predetermined number N (step 416); (2) timeout of the timer; and (3) a deviation of the current point from the route indicated by the route data of the current navigation information (step 418), then the processing flow returns to step 402.

The navigation information updating process performed by the navigation application 122 has been described above. Next, effects of the navigation information updating process are described below. Herein let it be assumed, as illustrated in Fig. 5A, that at the current point 501, the navigation application 122 of the smartphone 1 uses, as the current navigation information, navigation information that has been acquired from the navigation server 4 and that includes route data of the route 503 that avoids the congested section 502.

Let it be further assumed that the smartphone 1 then goes into the tunnel 500 as illustrated in Fig. 5C, and thus it becomes impossible for the smartphone 1, at the current point 511 in the tunnel 500, to access the navigation server 4. In this case, if, at this point of time, the navigation information acquired from the navigation server 4 and being used as the current navigation information includes N or more pieces of not-yet-provided guidance points where N is the predetermined number, then, as illustrated in Fig. 5C, the navigation application 122 of the smartphone 1 continues to use, as the current navigation information, the last navigation information that was acquired from the navigation server 4 and that includes the route data of the route 503 that avoids the congested section 502.

That is, in this case, as illustrated in Fig. 5B, searching for a route based on the map data stored in the storage apparatus 104 is not performed, and thus it is prevented to select the route 513 passing through the congested section 502. Therefore, navigation information including the route data of the route 513, which would otherwise be selected, is not used as the current navigation information in the route guidance.

Therefore, even in a case where it does not become again possible to access the navigation server 4 before reaching the branch point 514 at which the route is branched into two routes, that is, the route 503 that avoids the congested section 502 and the route 513 that passes through the congested section 502, it is possible to present the route 503 in the route guidance to avoid the congested section 502 unless the number of not-yet-provided guidance points remaining in the navigation information acquired from the navigation server 4 and being used as the current navigation information becomes smaller than the predetermined value N.

At a current point 521 after the tunnel 500 is passed through as illustrated in Fig. 5D, if it becomes again possible for the smartphone 1 to access the navigation server 4, then it is immediately restarted to periodically acquire navigation information from the navigation server 4. Thereafter, again in a normal situation, the latest navigation information is acquired from the navigation server 4 and route guidance is provided using the acquired navigation information as the current navigation information.

The present invention has been described above with reference to the embodiments. Although the embodiments are described taking the smartphone 1 as an example, the embodiments may be applied to many other types of apparatuses such as a mobile telephone (portable telephone), a car navigation apparatus, or the like adapted to acquire navigation information from the navigation server 4 and perform route guidance using the acquired guidance information such that when it is not allowed to access to the navigation server 4, the route guidance is performed using navigation information generated based on map data stored in the apparatus.

## Claims

1. A navigation apparatus including a mobile communication apparatus (101) for performing mobile communication, comprising:
current point calculation means (122) adapted to calculate the current point (501, 511);
navigation information acquisition means adapted to repeatedly and intermittently connect via the mobile communication to a navigation server (4) adapted to provide navigation information including route data representing a route from the current point to a specified destination and also including one or more pieces of guidance data each representing a guidance content associated with a guidance point at a guidance provision point in a section on the route from the current point, the navigation information acquisition means adapted to thereby acquire the navigation information for the specified destination and the current point that is calculated by the current point calculation means each time a connection to the navigation server is made;
a storage apparatus (104) in which map data is stored; and
guidance provision means,
wherein the guidance provision means is adapted to provide guidance such that
in a period in which the navigation information acquisition means is capable of connecting to the navigation server, the route is presented based on the current point calculated by the current point calculation means (122) and the last navigation information acquired by the navigation information acquisition means and guidance associated with a guidance point is provided when the current point calculated by the current point calculation means (122) becomes close to the guidance point, **characterised in that**
while in a period in which the navigation information acquisition means is not capable of connecting to the navigation server (4), when the last navigation information acquired by the navigation information acquisition means includes one or more pieces of not-yet-provided guidance data of guidance points, if a number of pieces of not-yet-provided guidance data is equal to or greater than a predetermined value, the route is presented based on the last navigation information acquired by the navigation information acquisition means and guidance associated with a guidance point is provided when the current point calculated by the current point calculation means (122) becomes close to the guidance point, but if the number of pieces of not-yet-provided guidance data is smaller than the predetermined value, a route to the specified destination from the current point calculated by the current point calculation means (122) is selected by performing searching based on the map data stored in the storage apparatus (104), one or more guidance provision points are set on the selected route, the selected route is presented, and guidance associated with a guidance provision point is provided when the current point calculated by the current point calculation means (122) becomes close to the guidance provision point.

2. The navigation apparatus according to claim 1, wherein the section is a section from the current point to a point on the route located apart from the current point by a predetermined distance.

3. The navigation apparatus according to claim 1, wherein the section is a section from the current point to a point on the route predicted to be reached by the navigation apparatus after an elapse of a predetermined time.

4. The navigation apparatus according to claim 1, 2, or 3, wherein when it becomes impossible to connect to the navigation server (4), the navigation information acquisition means monitors whether it again becomes possible to connect to the navigation server (4), and when it again becomes possible to connect to the navigation server (4), the navigation information acquisition means restarts to intermittently acquire navigation information.

5. A navigation system including a navigation apparatus according to any one of claims 1 to 4 and a navigation server (4) to which the navigation apparatus is capable of connecting via the mobile communication,
the navigation server (4) comprising navigation information provision means adapted to provide navigation information including route data and guidance data to the navigation apparatus, the route data representing a route from the current point to a destination both specified by the navigation apparatus connected to the navigation server via the mobile communication, the guidance data representing a guidance content associated with a guidance point at a guidance provision point in a section on the route from the specified current point.

## Patentansprüche

1. Navigationsgerät, das eine mobile Kommunikationsvorrichtung (101) zum Ausführen von Mobilkommunikation beinhaltet und Folgendes aufweist:
eine Berechnungseinrichtung (122) für einen aktuellen Punkt, die zum Berechnen des aktuellen Punkts (501, 511) ausgebildet ist;
eine Navigationsinformationsbeschaffungseinrichtung, die dazu ausgebildet ist, über die Mobilkommunikation wiederholt und intermittierend eine Verbindung zu einem Navigationsserver (4) herzustellen, der dazu ausgebildet ist, Navigationsinformation bereitzustellen, die Routendaten beinhaltet, die eine Route von dem aktuellen Punkt zu einem spezifizierten Ziel darstellen, und die auch einzelne oder mehreren Führungsdaten beinhaltet, die jeweils einen Führungsinhalt darstellen, der einem Führungspunkt an einem Führungsbereitstellungspunkt in einem Abschnitt auf der Route von dem aktuellen Punkt zugeordnet ist, wobei die Navigationsinformationsbeschaffungseinrichtung dazu ausgebildet ist, dadurch die Navigationsinformation für das spezifizierte Ziel und den von der Berechnungseinrichtung für den aktuellen Punkt berechneten aktuellen Punkt bei jeder Verbindung mit dem Navigationsserver zu beschaffen;
eine Speichervorrichtung (104), in der Kartendaten gespeichert sind; und
eine Führungsbereitstellungseinrichtung, wobei die Führungsbereitstellungseinrichtung dazu ausgebildet ist, Führung derart bereitzustellen,
dass in einer Periode, in der die Navigationsinformationsbeschaffungseinrichtung eine Verbindung zu dem Navigationsserver herstellen kann, die Route auf der Basis des von der Berechnungseinrichtung (122) für den aktuellen Punkt berechneten aktuellen Punkts sowie der von der Navigationsinformationsbeschaffungseinrichtung beschafften letzten Navigationsinformation angegeben wird und einem Führungspunkt zugeordnete Führung bereitgestellt wird, wenn der von der Berechnungseinrichtung (122) für den aktuellen Punkt berechnete aktuelle Punkt dem Führungspunkt nahe kommt,
**dadurch gekennzeichnet, dass** in einer Periode, in der die Navigationsinformationsbeschaffungseinrichtung keine Verbindung zu dem Navigationsserver (4) herstellen kann, wenn die letzte beschaffte Navigationsinformation von der Navigationsinformationsbeschaffungseinrichtung einzelne oder mehrere noch nicht bereitgestellte Führungsdaten von Führungspunkten beinhaltet und wenn eine Anzahl der noch nicht bereitgestellten Führungsdaten gleich einem oder größer als ein vorbestimmter Wert ist, die Route auf der Basis der letzten von der Navigationsinformationsbeschaffungseinrichtung beschafften Navigationsinformation angegeben wird und einem Führungspunkt zugeordnete Führung bereitgestellt wird, wenn der von der Berechnungseinrichtung (122) für den aktuellen Punkt berechnete aktuelle Punkt dem Führungspunkt nahe kommt, jedoch wenn die Anzahl der noch nicht bereitgestellten Führungsdaten kleiner als der vorbestimmte Wert ist, eine Route zu dem spezifizierten Ziel von dem von der Berechnungseinrichtung (122) für den aktuellen Punkt berechneten aktuellen Punkt ausgewählt wird durch Ausführen einer Suche auf der Basis der in der Speichervorrichtung (104) gespeicherten Kartendaten, ein oder mehrere Führungsbereitstellungspunkte auf der ausgewählten Route vorgegeben werden, die ausgewählte Route angegeben wird und einem Führungsbereitstellungspunkt zugeordnete Führung bereitgestellt wird, wenn der von der Berechnungseinrichtung (122) für den aktuellen Punkt berechnete aktuelle Punkt dem Führungsbereitstellungspunkt nahe kommt.

2. Navigationsgerät nach Anspruch 1,
wobei es sich bei dem Abschnitt um einen Abschnitt von dem aktuellen Punkt zu einem Punkt auf der Route handelt, der um eine vorbestimmte Distanz von dem aktuellen Punkt entfernt ist.

3. Navigationsgerät nach Anspruch 1,
wobei es sich bei dem Abschnitt um einen Abschnitt von dem aktuellen Punkt zu einem Punkt auf der Route handelt, dessen Erreichen nach Verstreichen einer bestimmten Zeit von dem Navigationsgerät vorhergesagt wird.

4. Navigationsgerät nach Anspruch 1, 2 oder 3,
wobei, wenn es unmöglich wird, eine Verbindung zu dem Navigationsserver (4) herzustellen, die Navigationsinformationsbeschaffungseinrichtung darauf überwacht, ob es wieder möglich wird, eine Verbindung zu dem Navigationsserver (4) herzustellen, und wenn es wieder möglich wird, eine Verbindung zu dem Navigationsserver (4) herzustellen, die Navigationsinformationsbeschaffungseinrichtung wieder beginnt, Navigationsinformation in intermittierender Weise zu beschaffen.

5. Navigationssystem, das ein Navigationsgerät nach einem der Ansprüche 1 bis 4 und einen Navigationsserver (4) beinhaltet, mit dem das Navigationsgerät eine Verbindung über die Mobilkommunikation herstellen kann,
wobei der Navigationsserver (4) eine Navigationsinformationsbereitstellungseinrichtung aufweist, die dazu ausgebildet ist, dem Navigationsgerät Navigationsinformation bereitzustellen, die Routendaten und Führungsdaten beinhaltet, wobei die Routendaten eine Route von dem aktuellen Punkt zu einem Ziel darstellen, die beide von dem über die Mobilkommunikation mit dem Navigationsserver verbundenen Navigationsgerät spezifiziert werden, wobei die Führungsdaten einen Führungsinhalt darstellen, der einem Führungspunkt an einem Führungsbereitstellungspunkt in einem Abschnitt auf der Route von dem spezifizierten aktuellen Punkt zugeordnet ist.

## Revendications

1. Appareil de navigation comprenant un appareil de communication mobile (101) pour réaliser des communications mobiles, comprenant :
un moyen de calcul de point courant (122) adapté pour calculer le point courant (501, 511) ;
un moyen d'acquisition d'informations de navigation adapté pour se connecter de façon répétée et de façon intermittente via la communication mobile à un serveur de navigation (4) adapté pour fournir des informations de navigation comportant des données d'itinéraire qui représentent un itinéraire allant du point courant à une destination spécifiée et comportant aussi une ou plusieurs donnée(s) de guidage qui représentent chacune un contenu de guidage associé à un point de guidage en un point de fourniture de guidage dans une portion de l'itinéraire partant du point courant, le moyen d'acquisition d'informations de navigation étant adapté pour acquérir ainsi les informations de navigation pour la destination spécifiée et le point courant qui est calculé par le moyen de calcul de point courant à chaque fois qu'une connexion au serveur de navigation est réalisée ;
un appareil de stockage (104) dans lequel sont stockées des données de carte ; et
un moyen de fourniture de guidage,
dans lequel le moyen de fourniture de guidage est adapté pour fournir un guidage de telle manière que :
dans une période dans laquelle le moyen d'acquisition d'informations de navigation est capable de se connecter au serveur de navigation, l'itinéraire est présenté en se basant sur le point courant calculé par le moyen de calcul de point courant (122) et sur les dernières informations de navigation acquises par le moyen d'acquisition d'informations de navigation et un guidage associé à un point de guidage est fourni quand le point courant calculé par le moyen de calcul de point courant (122) se rapproche du point de guidage, **caractérisé en ce que** :
au cours d'une période dans laquelle le moyen d'acquisition d'informations de navigation n'est pas capable de se connecter au serveur de navigation (4), quand les dernières informations de navigation acquises par le moyen d'acquisition d'informations de navigation comprennent une ou plusieurs donnée(s) de guidage de points de guidage non encore fournie(s), si le nombre de données de guidage non encore fournies est supérieur ou égal à une valeur prédéterminée, l'itinéraire est présenté en se basant sur les dernières informations de navigation acquises par le moyen d'acquisition d'informations de navigation et le guidage associé à un point de guidage est fourni quand le point courant calculé par le moyen de calcul de point courant (122) se rapproche du point de guidage, mais si le nombre de données de guidage non encore fournies est inférieur à la valeur prédéterminée, un itinéraire jusqu'à la destination spécifiée depuis le point courant calculé par le moyen de calcul de point courant (122) est sélectionné en réalisant une recherche basée sur les données de carte stockées dans l'appareil de stockage (104), un ou plusieurs points de fourniture de guidage sont établis sur l'itinéraire sélectionné, l'itinéraire sélectionné est présenté, et le guidage associé à un point de fourniture de guidage est fourni quand le point courant calculé par le moyen de calcul de point courant (122) se rapproche du point de fourniture de guidage.

2. Appareil de navigation selon la revendication 1, dans lequel la portion est une portion allant du point courant à un point de l'itinéraire qui est distant du point courant d'une distance prédéterminée.

3. Appareil de navigation selon la revendication 1, dans lequel la portion est une portion allant du point courant à un point de l'itinéraire pour lequel l'appareil de navigation prévoit une arrivée après l'écoulement d'un temps prédéterminé.

4. Appareil de navigation selon la revendication 1, 2 ou 3, dans lequel, quand il devient impossible de se connecter au serveur de navigation (4), le moyen d'acquisition d'informations de navigation surveille s'il est possible de se connecter à nouveau au serveur de navigation (4), et lorsqu'il est possible de se connecter à nouveau au serveur de navigation (4), le moyen d'acquisition d'informations de navigation recommence à acquérir de façon intermittente des informations de navigation.

5. Système de navigation comprenant un appareil de navigation selon l'une quelconque des revendications 1 à 4 et un serveur de navigation (4) auquel l'appareil de navigation est capable de se connecter via la communication mobile,
le serveur de navigation (4) comprenant un moyen de fourniture d'informations de navigation adapté pour fournir des informations de navigation comprenant des données d'itinéraire et des données de guidage à l'appareil de navigation, les données d'itinéraire représentant un itinéraire allant du point courant à une destination tout deux spécifiés par l'appareil de navigation connecté au serveur de navigation via la communication mobile, les données de guidage représentant un contenu de guidage associé à un point de guidage en un point de fourniture de guidage dans une portion de l'itinéraire partant du point courant spécifié.
